# EUROPÄISCHE PATENTANMELDUNG

(11) **EP 1 467 114 A1**
(43) Veröffentlichungstag der Anmeldung: **13.10.2004**
(21) Anmeldenummer: 03405240.7
(22) Anmeldetag: 09.04.2003
(51) Int. Cl.: F16F 7/08, F16F 7/12, B62D 27/00, B62D 25/14

(54) **Verbindungselement**

(71) Anmelder: Alcan Technology & Management Ltd., 8212 Neuhausen am Rheinfall (CH)
(72) Erfinder: Grbavac Jvan, 78333 Stockach (DE); Hein Jörg, 78256 Steisslingen (DE)

(57) **Zusammenfassung**

Bei einem Verbindungselement (10) aus zwei reibschlüssig miteinander verbundenen und nach Überwindung der den Reibschluss bewirkenden Kräfte unter Aufnahme von kinetischer Energie in Längsrichtung (x) des Verbindungselementes (10) relativ zu einander verschiebbaren Elementteilen (16,30) weist ein erstens Elementteil (16) wenigstens eine Bohrung und das zweite Elementteil (30) wenigstens einen in Längsrichtung (x) des Verbindungselementes (10) angeordneten, an wenigstens einer Stelle zu einer Bohrung (34,36) aufgeweiteten Langlochschlitz (32) auf. Schrauben, Nieten, Bolzen und dergleichen Befestigungselemente (44,46) mit einem Schaft durchsetzen die Bohrungen (24,26) im ersten Elementteil (16) und die Bohrungen (34,36) im zweiten Elementteil (30) und bilden eine Klemmverbindung.

## Beschreibung

Die Erfindung betrifft ein Verbindungselement aus zwei reibschlüssig miteinander verbundenen und nach Überwindung der den Reibschluss bewirkenden Kräfte unter Aufnahme von kinetischer Energie in Längsrichtung des Verbindungselementes relativ zu einander verschiebbaren Elementteilen, insbesondere eine Strebe zur Abstützung eines Cockpitträgers auf einem Tunnel eines Fahrzeuges.

Personenkraftwagen weisen einen unter der Instrumententafel angeordneten Querträger oder Cockpitträger auf. Derartige Cockpitträger tragen verschiedene, im Bereich der Instrumententafel angeordnete Anbauteile, wie z.B. Klimargerät, Airbag und Lenksäule. Damit Schwingungen, insbesondere des Lenkrades, gering gehalten werden, muss der Cockpitträger eine hohe Steifigkeit aufweisen und ist aus diesem Grund über eine Strebe, die Tunnelstrebe, gegen den Tunnel abgestützt.

Bei einem Frontalaufprall muss das Eindringen von Fahrzeugteilen in den Fahrgastraum verhindert werden. Dies gilt insbesondere auch für den Cockpitträger und die von diesem getragenen Anbauteile. Auf die zwischen Cockpitträger und Tunnel angeordnete Tunnelstrebe wirkt bei einem Frontalaufprall eine Zugkraft. Die Tunnelstrebe darf unter der Einwirkung der bei einem Aufprall auftretenden Kräfte nicht abreissen, sondern soll sich über einen Weg von ca. 50 mm mit einer Kraft von ca. 20 kN verformen.

Bei einer bekannten Strebe aus Stahlblech wird dieses Verformungsverhalten durch Auseinanderreissen eines Blechteiles erzielt, wobei die genannten Vorgaben nicht ganz erreicht werden, so dass die bekannte und gegenwärtig eingesetzte Konstruktion aus Stahlblech nur bedingt zufriedenstellend ist.

Der Erfindung liegt die Aufgabe zugrunde, ein zur Verwendung als Tunnelstrebe geeignetes Verbindungselement der eingangs genannten Art zu schaffen, mit welchem es möglich ist, ein vorgegebenes Lastniveau über einen vorgegebenen Weg weitgehend konstant zu halten. Zudem soll die Weglänge bzw. das vom Verbindungselement aufzunehmende Lastniveau auf einfache Weise an die jeweils gestellten Anforderungen angepasst werden können.

Zur erfindungsgemässen Lösung der Aufgabe führt, dass ein erstes Elementteil wenigstens eine Bohrung und das zweite Elementteil wenigstens einen in Längsrichtung des Verbindungselementes angeordneten, an wenigstens einer Stelle zu einer Bohrung aufgeweiteten Langlochschlitz aufweist, wobei Schrauben, Nieten, Bolzen und dergleichen Befestigungselemente mit einem Schaft die Bohrungen im ersten Elementteil und im zweiten Elementteil durchsetzen und eine Klemmverbindung bilden.

Bei einer bevorzugten Ausführungsform des erfindungsgemässen Verbindungselementes weist das erste Elementteil zwei in Längsrichtung des Verbindungselementes angeordnete Bohrungen auf und der Langlochschlitz ist an zwei Stellen zu Bohrungen aufgeweitet, wobei die Bohrungen im ersten Elementteil und die Bohrungen im zweiten Elementteil in gleichem Abstand zu einander angeordnet sind.

Zur Einstellung des gewünschten Kraftniveaus gibt es grundsätzlich zwei Möglichkeiten:
1. Die Schlitzbreite des Langlochschlitzes wird kleiner gewählt als der Durchmesser des Schaftes der Befestigungselemente. Bei einer Zugbelastung des Verbindungselementes werden die Schrauben bei Erreichen eines bestimmten Kraftniveaus innerhalb des Langlochschlitzes gezogen, wobei sich das Elementteil im Bereich des Langlochschlitzes durch die eintretende Schlitzaufweitung verformt.
2. Über die Klemmverbindung wird eine Flächenpressung zwischen den beiden Elementteilen erzeugt. Das zu erzielende Kraftniveau entspricht bei einer Schraubverbindung dem durch das Anzugsmoment der Schrauben erzeugten Reibungswiderstand zwischen den Elementteilen.

Die beiden vorstehend erwähnten Möglichkeiten zur Einstellung eines gewünschten Kraftniveaus können einzeln oder kombiniert angewendet werden.

Soll das Kraftniveau ausschliesslich über die Reibung zwischen den beiden Elementteilen eingestellt werden, kann die Reibung durch Aufrauhung wenigstens einer der einander anliegenden Oberflächen der Elementteile erhöht werden. Für diesen Fall wird die Schlitzbreite des Langlochsschlitzes grösser gewählt als der Durchmesser des Schaftes der Befestigungselemente.

Zweckmässigerweise ist eines der Elementteile am anderen Elementteil parallel zur Längsrichtung des Verbindungselementes geführt. Hierzu kann beispielsweise eines der Elementteile als Führungsschiene mit einem im wesentlichen U-förmigen Querschnitt ausgebildet sein. Das andere Elementteil weist einen im wesentlichen rechteckigen Querschnitt auf.

Geeignete Werkstoffe für die Elementteile des erfindungsgemässen Verbindungselementes sind beispielsweise Metalle und Kunststoffe, jedoch sind auch andere Werkstoffe denkbar. Die Werkstoffwahl richtet sich hauptsächlich nach der Höhe des zu erzielenden Kraftniveaus, wobei die für die Elementteile verwendeten Materialien in jedem Fall weicher sein müssen als der üblicherweise aus Stahl bestehende Schraubenwerkstoff. Das zweite Elementteil ist bevorzugt aus einer Aluminiumlegierung oder aus einem entsprechend weich-zähen Werkstoff gefertigt.

Ein als Tunnelstrebe zu Abstützung eines Cockpitträgers in einem Fahrzeug geeignetes Verbindungselement weist beispielsweise aus einer Aluminiumlegierung gefertigte Elementteile auf. Diese sind bevorzugt aus Blech geformt, können aber auch Strangpressprofile oder Gussteile sein.

Die Art der Verbindung der Elementteile mit dem Cockpitträger bzw. dem Tunnel richtet sich nach der Art der Konstruktion und kann beispielsweise durch Verschrauben, Schweissen, Nieten, Kleben oder auf andere geeignete Weise erfolgen.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 die Draufsicht auf ein erstes Elementteil eines Verbindungselementes;
- Fig. 2 einen Querschnitt durch das Elementteil von Fig. 1 nach deren Linie I-I:
- Fig. 3 die Draufsicht auf ein zweites Elementteil eines Verbindungselementes;
- Fig. 4 einen Querschnitt durch das Elementteil von Fig. 3 entlang deren Linie II-II:
- Fig. 5 eine Draufsicht auf das aus den Elementteilen von Fig. 1 und 3 zusammengesetzte Verbindungselement;
- Fig. 6 die Draufsicht auf ein Aufrauhmuster einer aufgerauhten Oberfläche eines Elementteils;
- Fig. 7 einen Querschnitt durch das Aufrauhmuster von Fig. 6.
- Fig. 8 die Anordnung eines Verbindungselementes als Strebe zwischen einem Cockpitträger und einem Tunnel eines Fahrzeuges.

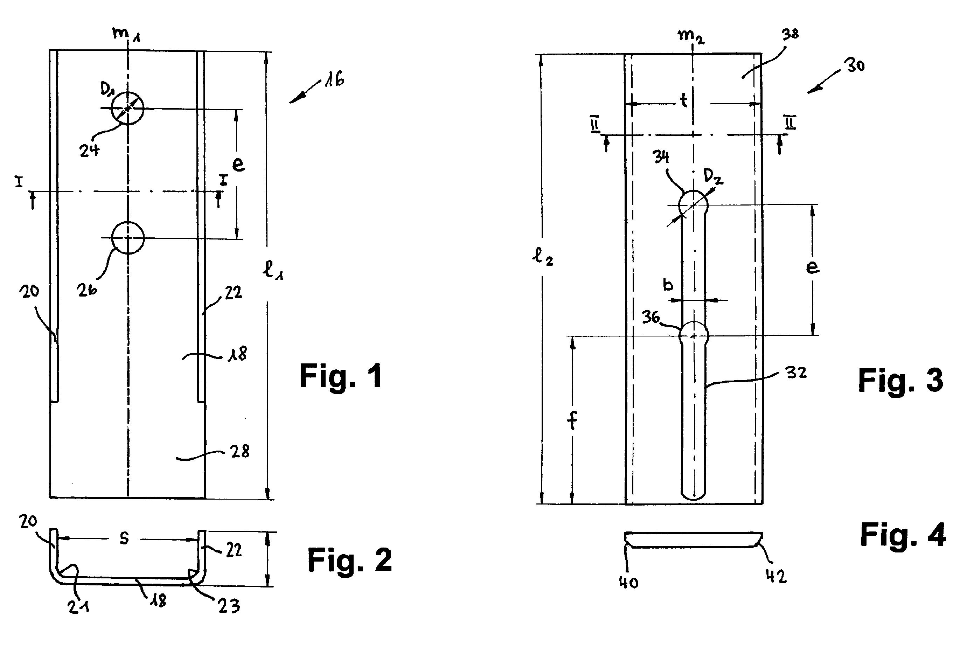

Ein in den Fig. 1 und 2 dargestelltes erstes Elementteil 16 eines Verbindungselementes 10 ist ein querschnittlich U-förmiges Profilstück mit einem ebenen Bodenstreifen 18 und seitlich von diesem rechtwinklig aufragenden Schenkelstreifen 20, 22. Der Bodenstreifen 18 weist zwei auf seiner Mittelllängsachse m₁ in einem Abstand e von beispielsweise 45 mm angeordnete Bohrungen 24, 26 auf. An einem den Bohrungen 24, 26 entfernt liegenden Ende des Elementteils 16 sind die Schenkelstreifen 20, 22 entfernt, so dass der Bodenstreifen 18 an dieser Stelle einen Montagesteg 28 bildet. Das erste Elementteil 16 weist beispielsweise eine Gesamtlänge l₁ von 185 mm und einen Abstand s der Schenkelstreifen 20, 22 von 48 mm auf. Der Durchmesser D₁ der Bohrungen 24, 26 beträgt z.B. 11 mm.

Ein in den Fig. 3 und 4 gezeigtes zweites Elementteil 30 des Verbindungselementes 10 ist ein flacher Profilstreifen, auf dessen Mittellängsachse m₂ ein Langlochschlitz 32 angeordnet ist. An einem Ende ist der Langlochschlitz 32 zu einer ersten Bohrung 34 erweitert. Eine weitere Erweiterung zu einer zweiten Bohrung 36 ist in gleichem Abstand e von beispielsweise 45 mm zur ersten Bohrung 34 wie die Bohrungen 24, 26 im ersten Elementteil 16 angeordnet. Der Abstand f zwischen der zweiten Bohrung 36 und dem Ende des Langlochschlitzes 32 beträgt beispielsweise 55 mm und ist somit grösser als der Abstand e zwischen der ersten Bohrung 34 und der zweiten Bohrung 36. Das der endständigen Bohrung 34 nahe Ende des zweiten Elementteils 30 ist als Montagesteg 38 vorgesehen. Das zweite Elementteil 30 weist beispielsweise eine Gesamtlänge l₂ von 185 mm und eine Breite t von 47 mm auf. Der Durchmesser D₂ der Bohrungen 24, 26 beträgt z.B. 10 mm.

Zwei Längskanten 40, 42 des zweiten Elementteils 30 sind auf der gleichen Seite in einem Winkel von etwa 45° angeschrägt.

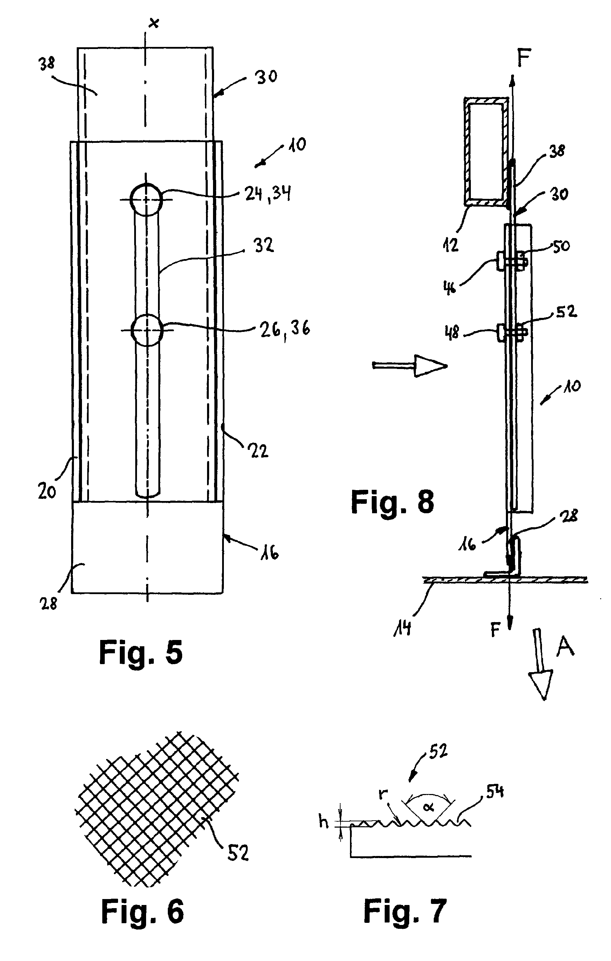

Fig. 5 zeigt das durch den Zusammenbau der beiden Elementteile 16, 30 gebildete Verbindungselement 10. Das zweite Elementteil 30 ist so in das ersten Elementteil 16 eingesetzt, dass die angeschrägten Längskanten 40, 42 des zweiten Elementteils 30 den gerundeten Innenlängskanten 21, 23 des ersten Elementteils 16 gegenüber liegen. Hierbei bilden die einander zugekehrten Oberflächen des zweiten Elementteils 30 und des Bodenstreifens 18 des ersten Elementteils 16 eine gemeinsame Berührungsfläche.

Das zweite Elementteil 30 ist im ersten Elementteil 16 in Richtung der Mittellängsachsen m₁ und m₂ in Längsrichtung x des Verbindungselementes 10 geführt. Im zusammengebauten Zustand des Verbindungselementes 10 sind die beiden Elementteile 16, 30 so zueinander positioniert, dass die Bohrungen 24, 26 im Bodenstreifen 18 des ersten Elementteils 16 zu den Bohrungen 34, 36 im Langlochschlitz 32 des zweiten Elementteils 30 konzentrisch angeordnet sind.

Die Verbindung der beiden Elementteile 16, 30 zum Verbindungselement 10 erfolgt durch Verschrauben, wobei je eine Schraube 44, 46 mit ihrem Schaft die übereinander liegenden Bohrungen 24, 34 bzw. 26, 36 durchsetzt und auf der Rückseite mit je einer Mutter 48, 50 verschraubt ist. Der Durchmesser D der verwendeten Schrauben entspricht etwa dem Durchmesser D₁ bzw. D₂ der Bohrungen 24, 26 bzw. 34, 36. Aus Gründen der besseren Übersicht sind die Schrauben 44, 46 und Muttern 48, 50 in Fig. 5 nicht dargestellt.

Zur Herstellung der beiden Elementteile 16, 30 kann z.B. Blech aus der Aluminiumlegierung AlMg3 verwendet werden, wobei die Blechdicke für das erste Elementteil 16 beispielsweise 2,5 mm und für das zweite Elementteil 30 beispielsweise 5 mm betragen kann. In jedem Fall ist darauf zu achten, dass das zweite Elementteil 30 aus einer Aluminiumlegierung oder aus einem entsprechend weich-zähen Werkstoff gefertigt ist. Das erste Elementteil 16 kann z.B. auch aus Stahl gefertigt sein.

Die einander zugekehrten Oberflächen des zweiten Elementteils 30 und des Bodenstreifens 18 des ersten Elementteils 16 können zur Erhöhung des Reibungswiderstandes aufgerauht sein. In den Fig. 6 und 7 ist ein durch Prägen erzeugtes Aufrauhmuster 52 beispielhaft dargestellt. Der Radius r der einzelnen Rillen 54 des Prägungsmusters beträgt beispielsweise 0,2 mm, der Flankenwinkel α z.B. 90° und die Höhe h der Rillen z.B. 0.42 mm.

Die Funktionsweise des Verbindungselementes 10 wird nachfolgend anhand der Fig. 5 näher erläutert.

Die an beiden Enden des Verbindungselementes 10 in Längsrichtung x abragenden Montagestege 28, 38 dienen zur Festlegung an den miteinander zu verbindenden Bauteilen. Tritt nun an den Bauteilen in Längsrichtung x des Verbindungselementes 10 eine entgegengesetzt gerichtete Kraft auf, überträgt sich diese als Zugkraft F auf das Verbindungselement 10. Erreicht nun die auf das Verbindungselement 10 wirkende Zugkraft F das Niveau der zum Hindurchziehen der Schrauben 44, 46 durch den Langlochschlitz 32 und zur Überwindung des Reibungswiderstandes der durch die Schraubverbindung gegeneinander gepressten Elementteile 16, 30 erforderlichen Kraft, werden die beiden Elementteile in ihrer Längsrichtung x auseinandergezogen, wobei die Schrauben 44, 46 durch den Langlochschlitz 32 hindurchgezogen werden und diesen erweitern.

Das auf das Verbindungselement 10 wirkenden Kraftniveau wird so lange aufrecht erhalten, bis sich das Verbindungselement 10 um einen Betrag entsprechend der Distanz e zwischen den beiden Bohrungen 24, 26 bzw. 34, 36 verlängert hat. Bei weiterer Verlängerung des Verbindungselementes 10 wird der Langlochschlitz 32 nur noch von einer Schraube 46 erweitert, während die andere Schraube 44 in einen bereits aufgeweiteten Schlitzbereich eintritt. Dies hat zur Folge, dass das Kraftniveau stetig aber langsam abfällt.

Ein in Fig.8 gezeigtes Verbindungselement 10 dient zur Abstützung eines Cockpitträgers 12 auf einem Tunnel 14 eines nicht näher dargestellten Fahrzeuges. Das Verbindungselement 10 ist mit dem Cockpitträger 12 und dem Tunnel 14 beispielsweise verschweisst. Bei einem Frontalaufprall wird der Tunnel 14 in Richtung des Pfeils A verformt, so dass auf das Verbindungselement 10 in seiner Längsrichtung x eine Zugkraft F wirkt, die bei Erreichen eines vorgegebenen Kraftniveaus zu einer Verschiebung der Elementteile 16, 30 relativ zu einander in Längsrichtung x und insgesamt zu einer Verlängerung des Verbindungselementes 10 führt.

## Patentansprüche

1. Verbindungselement aus zwei reibschlüssig miteinander verbundenen und nach Überwindung der den Reibschluss bewirkenden Kräfte unter Aufnahme von kinetischer Energie in Längsrichtung (x) des Verbindungselementes (10) relativ zu einander verschiebbaren Elementteilen (16,30),
**dadurch gekennzeichnet, dass**
ein erstes Elementteil (16) wenigstens eine Bohrung und das zweite Elementteil (30) wenigstens einen in Längsrichtung (x) des Verbindungselementes (10) angeordneten, an wenigstens einer Stelle zu einer Bohrung (34,36) aufgeweiteten Langlochschlitz (32) aufweist, wobei Schrauben, Nieten, Bolzen und dergleichen Befestigungselemente (44,46) mit einem Schaft die Bohrungen (24,26) im ersten Elementteil (16) und die Bohrungen (34,36) im zweiten Elementteil (30) durchsetzen und eine Klemmverbindung bilden.

2. Verbindungselement nach Anspruch 1, **dadurch gekennzeichnet, dass** das erste Elementteil (16) zwei in Längsrichtung (x) des Verbindungselementes (10) angeordnete Bohrungen (24,26) aufweist und der Langlochschlitz (32) an zwei Stellen zu Bohrungen (34,36) aufgeweitet ist, wobei die Bohrungen (24,26) im ersten Elementteil (16) und die Bohrungen (34,36) im zweiten Elementteil (30) in gleichem Abstand (e) zu einander angeordnet sind.

3. Verbindungselement nach Anspruch 1 oder 2, **dadurch gekennzeichnet, dass** die Schlitzbreite (b) des Langlochschlitzes (32) kleiner ist als der Durchmesser (D) des Schaftes der Befestigungselemente (44,46).

4. Verbindungselement nach Anspruch 1 oder 2, **dadurch gekennzeichnet, dass** die Schlitzbreite (b) des Langlochschlitzes (32) grösser ist als der Durchmesser (D) des Schaftes der Befestigungselemente (44,46).

5. Verbindungselement nach einem der Ansprüche 1 bis 4, **dadurch gekennzeichnet, dass** eines der Elementteile (30) am andern Elementteil (16) parallel zur Längsrichtung (x) des Verbindungselementes (10) geführt ist.

6. Verbindungselement nach Anspruch 5, **dadurch gekennzeichnet, dass** eines der Elementteile (16) als Führungsschiene mit einem im wesentlichen U-förmigen Querschnitt ausgebildet ist und das andere Elementteil (30) einen im wesentlichen rechteckigen Querschnitt aufweist.

7. Verbindungselement nach einem der Ansprüche 1 bis 6, **dadurch gekennzeichnet, dass** die beiden Elementteile (16,30) einander über je eine ebene Oberfläche anliegen.

8. Verbindungselement nach Anspruch 7, **dadurch gekennzeichnet, dass** wenigstens eine der aneinander liegenden Oberflächen der Elementteile (16,30) ein Rauheitsmuster aufweist.

9. Verbindungselement nach einem der Ansprüche 1 bis 8, **dadurch gekennzeichnet, dass** das zweite Elementteil (30) aus einer Aluminiumlegierung oder aus einem entsprechend weich-zähen Werkstoff gefertigt sind.

10. Fahrzeug mit einem über eine Strebe auf einem Tunnel (14) abgestützten Cockpitträger (12), **dadurch gekennzeichnet, dass** die Strebe ein Verbindungselement (10) nach einem der vorangehenden Ansprüche ist.
